# EUROPEAN PATENT APPLICATION

(11) **EP 4 797 620 A1**
(43) Date of publication of application: **26.08.2026**
(21) Application number: 25275009.6
(22) Date of filing: 20.02.2025
(51) Int. Cl.: H04L 9/40, H04L 9/32

(54) **HIGH INTEGRITY COMMUNICATIONS UTILISING PUBLIC KEY CRYPTOGRAPHY SIGNATURES**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A method for verifying messages sent over a shared network, comprising generating at least one key pair comprising a private key and a public key and assigning the key pair to a first element connected to a shared media. The public key is distributed to at least a second element on the shared media. A message is transmitted from the first element to the second element. The message comprises an identifier, a data set, a message digest, and an encrypted message digest, generated by encrypting the message digest with the private key. The second element verifies the message received at the second element by decrypting the encrypted message digest using the public key corresponding to the identifier and comparing the decrypted message digest with a calculated message digest.

## Description

### FIELD

The present invention relates to a system and method for verifying messages transmitted over a shared network.

### BACKGROUND

Secure messaging through the use of digital signatures schemes is well known. In such instances, a secure hashing function is used to create a message digest which is then encrypted using an asymmetric cypher to produce a digital signature for a message. The message is received at a receiver which is able to verify the integrity of the message through the secure hashing function and confirm the authenticity of the sender through the asymmetric cypher. The aim of the digital signature is to protect against external malicious interference. Digital signatures require complex algorithms and large cryptographic keys in order to provide the required level of security. As a result, they require significant computing resource to process as well as substantial time for encryption and decryption. As such these methods are not suitable for use in resource constrained systems. Other methods, such as Cyclic Redundancy Check (CRC) provide methods for checking the integrity of messages sent over point-to-point links but are not sufficient for messages sent over shared networks where an authenticity check is also required. For resource constrained system there is, therefore, a need for a low-resource method for checking both the authenticity and integrity of messages sent over a shared network.

The embodiments described below are not limited to implementations which solve any or all of the disadvantages of known methods of checking the authenticity and integrity of messages.

### SUMMARY

According to a first aspect of the present invention, there is provided a method for verifying messages sent over a shared network, the method comprising: generating at least one key pair comprising a private key and a public key which each have a key length of 128 bits or less; assigning the key pair to a first element connected to a shared media; distributing the public key to at least a second element connected to the shared media; generating, at the first element, a message digest for a data set; encrypting the message digest using the private key to generate an encrypted message digest; transmitting a transmitted message comprising the data set, the encrypted message digest and an identifier generated by the first element; receiving a received message at the second element, the received message comprising a received data set, the identifier and the encrypted message digest; and verifying the message in real time by: decrypting, at the second element, the encrypted message digest using a public key corresponding to the identifier to generate a decrypted message digest; calculating, at the second element, a calculated message digest from the received data set; and comparing the decrypted message digest and the calculated message digest.

Verifying the message in real time may further comprise, before applying the public key to the received message digest, retrieving the public key corresponding to the identifier from a key store accessible by the second element.

A plurality of elements may be connected to the network and generating at least one key pair may comprise generating a key pair for each of the plurality of elements and distributing the public key of each key pair to each of the plurality of elements.

The method may further comprise, in response to determining that the calculated message digest and the decrypted message digest are equal, using the data set.

In response to determining that the calculated message digest and the decrypted message digest are not equal, the method may comprise the step of rejecting the data set.

The length of the public key or the private key may be 64 bits or less. For example, the length of the public key or the private key may be 32 bits.

The message digest may be calculated using a checksum or a cyclic redundancy check.

The shared network may be a closed network.

The elements may be power-constrained computing devices.

According to a second aspect of the present invention, there is provided a system for sending and verifying a message comprising; a plurality of elements; a network connected to the plurality of elements; a plurality of key pairs, each pair corresponding to one of the plurality of elements and comprising a private key and a public key which each have a key length of 128 bits or less; wherein a first element is arranged to: generate a message digest for a data set; encrypt the message digest using the private key corresponding to the first element to generate an encrypted message digest; transmit a transmitted message comprising the data set, the encrypted message digest and a identifier generated by the first element; wherein a second element is arranged to: receive a received message comprising the encrypted message digest, the identifier and a received data set; and verify the message in real time by:
applying a public key corresponding to the identifier to the encrypted message digest to generate a decrypted message digest;
calculating a calculated message digest from the received data set and
comparing the decrypted message digest and the calculated message digest.

Each element may comprise a key store for storing the private key corresponding to the element and public keys corresponding to other elements connected to the network.

In response to the comparison identifying that the message digest and the decrypted message digest are equal the second element may be arranged to use the data set.

In response to the comparison identifying that the message digest and the decrypted message digest are not equal the second element may be arranged to reject the data set.

The length of the public key or the private key may be 64 bits or less. For example, the length of the public key or the private key may be 32 bits.

The message digest may be calculated by a cyclic redundancy check.

The network may be a closed network.

The elements may be power-constrained computing devices.

### BRIEF DESCRIPTION OF THE FIGURES

Embodiments of the invention will now be described by way of example only with reference to the figures, in which:
Figure 1 shows a sender element according to the present invention;
Figure 2 shows a receiver element according to the present invention; and
Figure 3 shows a flow diagram showing a method according to the present invention; and
Figure 4 is a schematic diagram of a computing-based device which may operate as a sender and/or receiver element according to the present invention.

### DETAILED DESCRIPTION

The present invention relates to a system and methods for verifying the authenticity and integrity of a message sent over a network. In particular, the present invention provides a system and method for sending messages between nodes connected to a network where the nodes are resource constrained and have safety requirements which necessitate verification of both received data, and the sender of said data.

In general, the system comprises a plurality of elements which are connected via a shared network media. The connection facilitates the sending of messages between elements. The shared network media can use physical communication links such as for a wired Ethernet network and/or can use wireless communication links. The shared network media facilitates the plurality of elements to be connected to form a network. The elements can be part of an embedded control system. In particular, the elements can be parts of an embedded control system for a moving platform. The messages sent between the elements are safety-critical and as such require that the integrity, or correctness, of data contained within the message and the authenticity of the identified source can be verified. Further, due to the timeliness requirements for the messages, the verification process must be as close to instantaneous as possible. For example, the system can require that messages be transmitted at a rate of 100 messages or more per second and/or that messages are processed within 10µs. The elements of such systems are often resource constrained, both in terms of computational power and time. In such systems, in particular where the network is a closed network, the principal concern is one of safety rather than of security. Therefore, in order to preserve power and time the data sent between elements is often not required to be encrypted but the verification process is key to enable safety requirements to be met. One such safety requirement can be that the probability of erroneous operation is very low, such as in environments where human safety is at risk. For example, in some instances the probability of erroneous operation must be less than 1e-5 or 1e-9 failures per operating hour. The methods and system described herein verifiably reduce the probability of errors induced due to masquerading to levels suitable for such a safety requirement.

Masquerading refers to a message presenting, at a receiver element, as having originated from an element other than the element from where the message originated. Masquerading can have a negative impact on a system. For example, resources can be wasted in responding to erroneous messages. Additionally, if the receiver element fails to identify an instance of masquerading the receiver element can action the message as though it originated from the element which the message is presenting as having originated. This can result in the receiver element introducing errors or delays into the system. Further, legitimate messages can be lost due to masquerading which can cause further errors and delays. This is of particular importance where the elements are operating in a time-critical environment.

Further, issues can arise where data within a message has become corrupted during transfer from one element to another. If a receiver has failed to detect that the data is corrupted, and actions the data as it is received, this can cause system errors and delays.

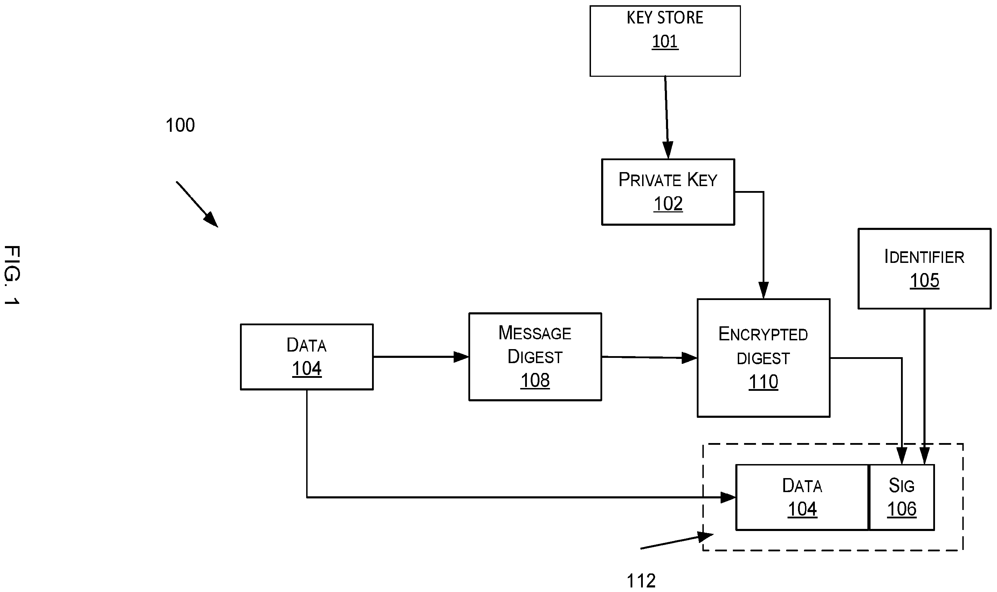

Figure 1 shows a schematic drawing of a sender element 100 according to the present invention. The sender element 100 is connected to a network. There are a plurality of elements connected to the network which are in communication with each other, via a shared network media. The sender element 100 is arranged to send a message 112 to a receiver element 200, via the shared network media. The message can comprise data or instructions intended for action by the receiver element.

A key pair suitable for asymmetric encryption is generated for a plurality of elements connected to the network. In particular, for each element connected to the network which needs to demonstrably achieve the message validation as described herein. Additional elements can be connected to the network which are not required to validate messages and therefore do not require a key pair. Each key pair is assigned to a particular element. The key pair comprises a private key 102 and public key 202 which are specific to a particular element. The key pairs are generated using any known method and in particular can be generated using a cryptographic algorithm such as Rivest-Shamir-Adleman (RSA) or Elliptic Curve Digital Signature Algorithm (ECDSA). The private key 102 and the public key 202 can be any length but preferably they are 128 bits, 64 bits or 32 bits. In such a way, the keys are a size which are suitable for use in environments with constrained processing power. Further, the keys can be stored at elements where only small amounts of storage are available for key storage and key lengths of 2048 bits or more are not practical. The private key 102 for each element is stored at a location only accessible to the associated element, for example a key store 101 located at the element. The public keys 202 for each element are distributed to each of the other elements connected to the network. The key store 101 at any given element stores the public key 202 for each of the other elements on the network and can store the private key 102 of said element. In such a way, each element has access to its associated private key 102 and the public key 202 for each of the other elements connected to the same network. A message signed by the private key 102 of a first element can therefore be verified by a second element using the public key 202 for the first element.

The sender element 100 of Figure 1 has a public key and a private key 102 specific to the sender element 100. The public key and the private key 102 are a key pair suitable for asymmetric encryption. The private key 102 is only accessible by the sender element 100 while the public key is accessible by all of the other elements which are in communication with the sender element on the network, and in particular is known to the receiver element 200.

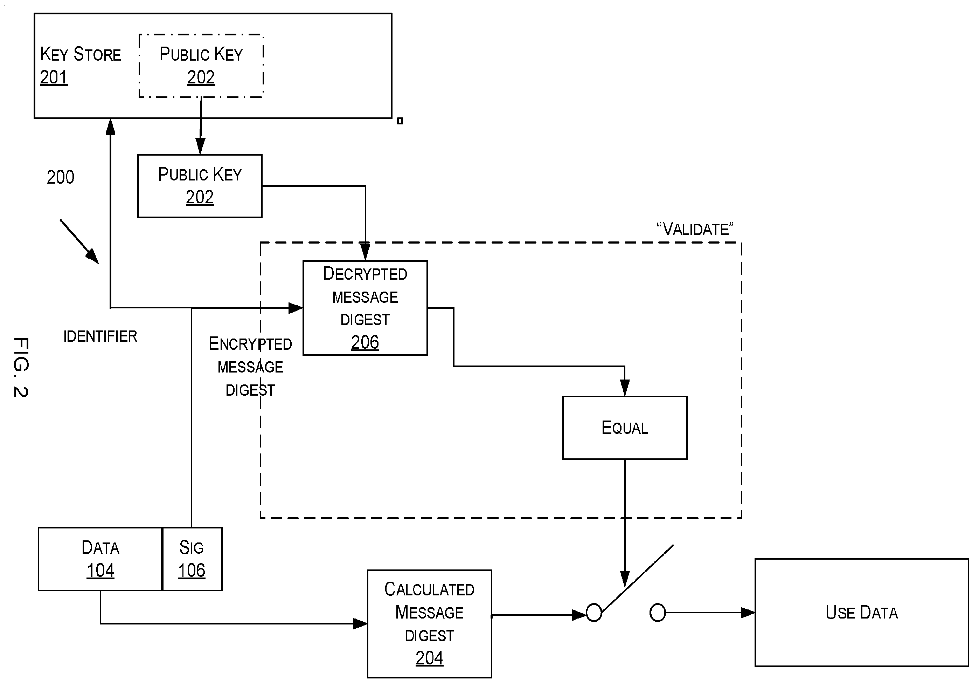

The sender element 100 generates data 104 which is to be sent from the sender element 100 to the receiver element 200 (shown in Figure 2). In some examples the data 104 is encrypted data and in other examples the data 104 is not encrypted. The data 104 can be instructions for the receiver element to action or data collected by the sender element 100. The data 104 together with a signature 106 form a message 112 which is sent to the network shared media, for onwards transmission to the receiver element 200. The signature 106 comprises an identifier 105 and an encrypted message digest. The intention of the identifier is to indicate to the receiver element 200 which of the elements connected to the network is the sender element 100 of the message 112. In some examples, a system fault occurs at the sender element 100 which results in the identifier not corresponding to the genuine sender element 100. An identifier generated by masquerading can correspond to a different element connected to the network.

The encrypted message digest 110 provides means for the receiver element 200 to identify masquerading by the sender element 100. Any known message digest format can be used. The message digest can be generated using a checksum or cyclic redundancy check. At the sender element 100, a message digest 108 is generated from the data 104 to be sent to the receiver element 200. The message digest 108 is specific to the data 104. The message digest 108 can be generated using any known method. In particular, an algorithm can be applied to the data 104 to produce a checksum value which is unique to the data 104. One example of a suitable method is cyclic redundancy check (CRC), but any other error detecting code can be used. The sender element 100 retrieves the private key 102 from the key store 101. The private key 102 is applied to the message digest 108 to generate an encrypted message digest 110. The encrypted message digest 110 together with the identifier 105 forms the signature 106. As the encrypted message digest is generated using the data 104 and the private key 102, the encrypted message digest is not at risk of masquerading because the private key 102 of the sender element 100 is only available for encrypting at the sender element 100 (and not available at any other element in the network). The encrypted message digest can subsequently be decrypted at the receiver element by applying the other half of the key pair, which was used for encryption, as described below. This other half of the key pair is the public key of the genuine sender element 100. Where masquerading has not occurred, the public key required to decrypt the encrypted message digest 110 can be identified, at the receiver element 200, by the identifier.

The sender element 100 generates a message 112 comprising the data 104 (which may be in unencrypted form) and a signature 106 comprising the encrypted message digest 110 and the identifier. The message 112 can also comprise means for identifying the intended receiver element. The message can be sent from the sender element 100 to the shared network media. The shared network media identifies the intended receiver element 200 and transmits the message 112 to the receiver element 200.

Figure 2 shows a schematic drawing of the receiver element 200. The receiver element 200 receives the message 112 from the shared network media. In some examples, the data is not encrypted data 104 and therefore the receiver element 200 can access the data 104 without further decryption. In other examples, a separate encryption and decryption process can be carried out on the data 104 between the sender element 100 and the receiver element 200. The receiver element 200 calculates a message digest 204 from the data using the same method as applied by the sender element 100 to calculate the message digest to be encrypted. If the data 104 received at the receiver element 200 is identical to the data 104 sent by the sender element 100, the calculated message digest 204 will match the message digest 108 generated by the sender element 100 and encrypted using the private key 102 of the sender element. In some examples, the data 104 is corrupted between being generated at the sender element 100 and being received at the receiver element 200. In such examples, the calculated message digest 204 calculated by the receiver element 200 will not correspond to the message digest 108 calculated and encrypted at the sender element 100.

The receiver element 200 interrogates the signature to identify the identifier. The identifier identifies, to the receiver element 200, another element connected to the network. The receiver element 200 retrieves the public key which corresponds to the identified element from the key store 201 of the receiver element 200. The key store 201 of the receiver element 200 comprises the public keys of all other element connected to the network, and optionally the private key of the receiver element 200. The key store can be a physical storage medium located at the receiver element or can be a cloud storage medium. The receiver element 200 applies the retrieved public key 202 to the encrypted message digest 110 received as part of the message. In some examples, the identifier corresponds to the genuine sender element 100. In such examples, the retrieved public key 202 is part of the same key pair which was used to encrypt the message digest 106 at the sender element 100 and is therefore suitable for decryption of the encrypted message digest 110. The receiver element 200 can then retrieve a decrypted message digest 206 which corresponds to the message digest 108, prior to encryption. Where the advertised sender element and the genuine sender element 100 are the same, the retrieved public key 202 will successfully decrypt the encrypted message digest. In such a scenario, no masquerading has occurred and the message 112 is authentic. Where the message digest calculated by the receiver element 200 and the message digest decrypted by the receiver element 200 match, this indicates to the receiver element 200 that the data 104 has not been corrupted and the advertised sender is the genuine sender. The receiver element 200 can then process the data as intended.

In some examples, the identifier does not correspond to another element on the network and the receiver element 200 is not able to retrieve a public key 202 from the key store 201. In such examples, the receiver element 200 rejects the message. In other examples, the identifier identifies an element connected to the network, which is different to the sender element 100, this element is the masquerade element. In such examples, the receiver element 200 will retrieve the public key corresponding to the masquerade element from the key store 201. Since the retrieved public key does not correspond to the genuine sender element 100, the receiver element 200 will be unable to correctly decrypt the encrypted message digest 110. In such a scenario, a comparison between the calculated message digest and the decrypted message digest will identify a difference between the two values. In response, the second element 200 can reject the message.

In such a way, the present invention provides a means for confirming that the advertised sender is the actual sender, and that the data has not been corrupted in transit. For example, an error can occur at a first element which causes messages sent from that element to masquerade as having come from a second element. When said message is received at a third element, the public key which corresponds to the identifier will not decrypt the message digest received. This indicates to the third element that the advertised sender, as indicated by the identifier, is not the element which the message originated from and accordingly that the message is not authentic. In response, the third element does not act on the received data.

In another example, the advertised sender element is the genuine sender element 100 and the present invention provides a means for identifying that the data has been corrupted. In such an example, the receiver element 200 retrieves the public key 202 corresponding to the advertised sender from the key store 201. The receiver element 200 then applies retrieved public key 202 to the encrypted message digest 110. The receiver element 200 also calculates a calculated message digest 204 from the received data. The sender 200 compares the decrypted message digest 206 with the calculated message digest 204. If the decrypted message digest 206 and the calculated message digest 204 do not match, the receiver element 200 identifies that the data 104 is corrupted and accordingly disregards the data. In such an example, the sender element 100 may have introduced a corruption in the data. Alternatively, the corruption could have been introduced by the network.

The above examples illustrate how the present invention provides means for identifying both an error or fault with a sender element, and an error with received data.

The present invention is suitable for use in environments which have computational resource constraints and require a highly reliable system. For example, a system where the probability of erroneous operation has to be less than 1E-9 per operating hour. The public and private keys described herein can have key lengths which do not require excessive computational overheads. For example, the key length of each key can be 128-bit, 64 bit or 32 bit. In such a way, the present invention is suitable for environments which have limited computational resource that are not suitable for traditional methods which require a key length of, for example 256 bit or 2048 bit. Traditional methods also require longer timescales for verification of a message, due to the length of the keys, compared to the timescales required to verify a messaging using the present invention. The present invention is therefore better suited to environments which require messages to be verified for both integrity and authenticity within shorter timescales. Further, the present invention provides such means for data which is not encrypted which further reduces the processing requirements for verification through the present invention.

In some examples the key pairs are Rivest Shamir Adleman (RSA) key pairs. In other example the key pairs are Elliptic Curve Cryptography (ECC) key pairs. The keys of the key pairs can be any length for examples 32, 64, 256, 384, 512, 1024, 2048 or 4096 bits. The greatest benefit in terms of resource is exhibited when the key pairs are of shorter lengths such as 32 or 64 bits.

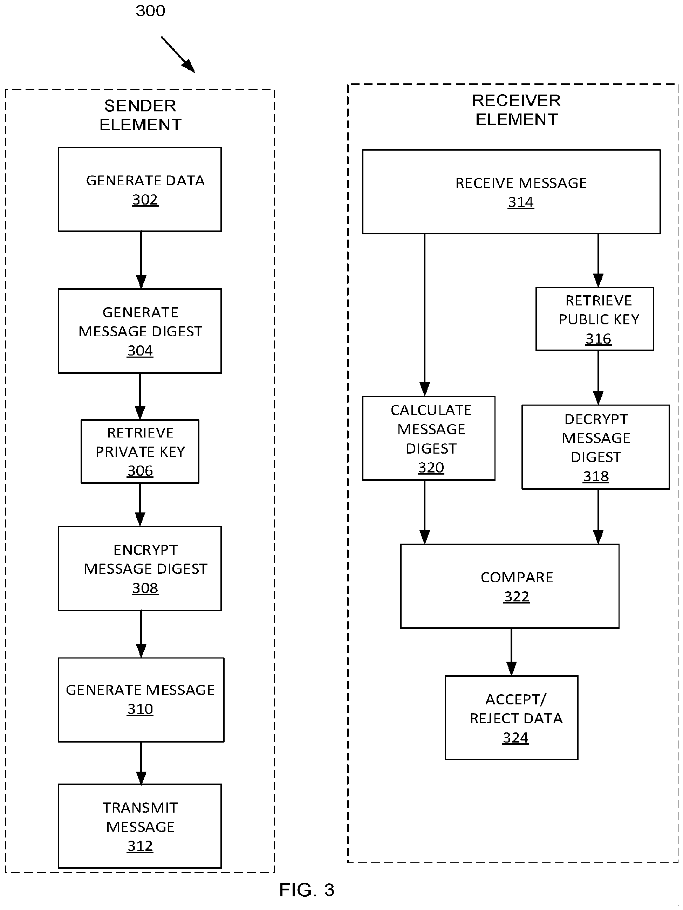

Figure 3 is a flowchart illustrating an example method 300 according to the present invention carried out by the sender element 100 and the receiver element 200. The sender 100 and receiver 200 elements can be nodes connected to a network. In some examples, the network is a closed network which is isolated from external networks. In such a way, the system is a closed system with only defined nodes able to interact with one another. The sender element 100 has access to the public keys for each of the elements connected to the network and the private key for the sender element 100. The receiver element 200 has access to the public keys for each of the elements connected to the network and the private key for the receiving element 200. The keys can be stored locally in a key store at each element. The key store can be a separate memory device which is connected to the element. In some examples the keys are loaded on to each element at system set up. In other examples, the keys are downloaded via software. The keys at each element can be updated to reflect the introduction or removal of elements from the system. For example, if an element is added to the system a key pair will be generated for that element and the keys stored by the other elements updated to include the public key of the added element.

At the sender element 100, data is generated 302 to be sent in a message to the receiver element 200. The data for example, relates to positional data of a movable platform. In other examples, the data could be an instruction or an error alert. The data is intended to be sent from the sender element to a receiver element. The sender element 100 generates 304 a message digest from the data to be sent. The sender element 100 then retrieves 306 the private key for the sender element 100 from the key store of the sender element 100. The sender element 100 encrypts 308 the message digest using the private key. The encrypted message digest can be decrypted using the public key corresponding to the private key with which it was encrypted. Therefore, the encrypted message digest can be decrypted by applying the public key of the sender element, which is stored in the key store of each element on the network. However, in order for the receiving element to identify which public key to apply, it is necessary to include an identifier which declares which element has sent the data, and therefore which public key should be applied to decrypt 318 the message digest. The sender element 100 combines the encrypted message digest with the identifier, identifying the sender element 100 to form a signature. In some cases, the sender element is corrupted or experiencing an error and, as a result, the identifier which the sender element includes in the signature is not the identifier for the sender element. For example, the identifier can be an identifier for a different element connected to the network. The signature comprising the identifier and the encrypted message digest are appended to the data to generate 310 the message. The message is then transmitted 312 by the sender element to the shared network media.

The receiver element 200 receives 314 the message. The receiver element 200 interrogates the identifier and retrieves 316 from the key store of the receiver element 200, the public key corresponding to the identifier of the message. In some examples, the data of the message is not encrypted therefore the receiver element is not required to decrypt the data in order to calculate a message digest for the received data. The systems and methods provided herein provide safety provisions without requiring data to be encrypted by using unencrypted data, the system design can be simplified as no additional encryption and decryption processes are required. Further, where the elements are power restricted using unencrypted data compared to encrypted data is beneficial as doing so requires less computational resource. Where messages are required in real-time, transmitting unencrypted data takes less time than encrypting, transmitting, and decrypting data. Further the system and methods described herein have further advantages in reducing the time it takes to verify the message at the receiver element. Real-time can refer to transmission from a first element to a second element taking less than 0.1 seconds, for example 0.01 seconds or less. In other examples, additional encryption is applied to the data and the data is decrypted prior to calculating the message digest. The receiver element 200 calculates 320 a calculated message digest from the received data. The receiver element 200 applies the retrieved public key to decrypt 318 the message digest of the signature to generate a decrypted message digest. The receiver then compares 322 the calculated message digest with the decrypted message digest.

In some examples, the calculated message digest corresponds to the decrypted message digest. This indicates that the advertised sender element is the actual sender element, and that the data corresponds to the data which was generated 302 by the sending element. In some examples, the receiver is not able to correctly decrypt the message digest of the signature because the advertised sender element does not correspond to the actual sender. In such a way, the public key retrieved by the receiver element is not part of the same key pair as the private key used to encrypt the message digest and as such cannot properly decrypt the message digest. In some examples, the calculated message digest is incorrect in that it does not correspond to the message digest calculated at the sender element. The calculated message digest being incorrect identifies an error in the data received at the receiver element. In said examples the data can have become corrupted between the data being generated 302 at the sender element and received at the receiver element. In examples where the message digest has not been correctly decrypted, or the calculated message digest is incorrect, the receiver element rejects the data of the message and does not action the data.

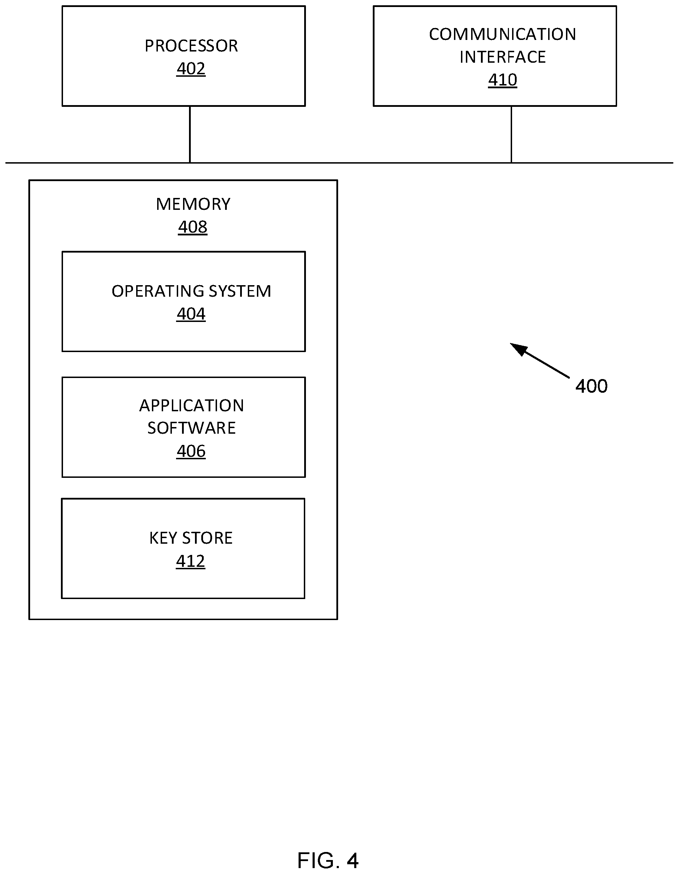

Figure 4 illustrates various components of an exemplary computing-based device 400 which may be implemented as any form of a computing and/or electronic device, and which may operate as a sender element 100 and/or a receiver element 200 as described above.

Computing-based device 400 comprises one or more processors 402 which may be microprocessors, controllers or any other suitable type of processors for processing computer executable instructions to control the operation of the device in order to implement the methods shown in Figure 3 and described herein. As described above, the methods of Figure 3 may be implemented in a resource-constrained device and as such the processor 402 may have limited capabilities in terms of processing power and/or energy consumption. Furthermore, the amount of memory 408 within the computing-based device 400 may also be limited.

In some examples, for example where a system on a chip architecture is used, the processors 402 may include one or more fixed function blocks (also referred to as accelerators) which implement a part of the method of sending or receiving a message, according to one of the methods described herein, in hardware (rather than software or firmware). Platform software comprising an operating system 404 or any other suitable platform software may be provided at the computing-based device to enable application software 406 to be executed on the device. The application software 406 may comprise software to perform either or both of the methods shown in Figure 3 (e.g. to perform the data generation, message digest generation, encryption and message generation and/or to perform the message digest calculation, decryption and comparison of message digests).

The computer executable instructions may be provided using any computer-readable media that is accessible by computing based device 400. Computer-readable media may include, for example, computer storage media such as memory 408 and communications media. Computer storage media, such as memory 408, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 408) is shown within the computing-based device 400 it will be appreciated that the storage may be distributed or located remotely and accessed via a network or other communication link (e.g. using communication interface 410). The memory 408 may also comprise the key store 412.

The communication interface 410 in the computing-based device 400 is used to transmit and/or receive messages over a shared media.

The term 'computer' is used herein to refer to any device with processing capability such that it can execute instructions. Those skilled in the art will realize that such processing capabilities are incorporated into many different devices and therefore the term 'computer' includes PCs, servers, mobile telephones, personal digital assistants and many other devices.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the spirit or scope of this invention.

## Claims

1. A method for verifying messages sent over a shared network, the method comprising the steps of
generating at least one key pair comprising a private key and a public key which each have a key length of 128 bits or less;
assigning the key pair to a first element connected to a shared media; distributing the public key to at least a second element connected to the shared media;
generating, at the first element, a message digest for a data set; encrypting the message digest using the private key to generate an encrypted message digest;
transmitting a transmitted message comprising the data set, the encrypted message digest and an identifier generated by the first element;
receiving a received message at the second element, the received message comprising a received data set, the identifier and the encrypted message digest; and
verifying the message in real time by:
decrypting, at the second element, the encrypted message digest using a public key corresponding to the identifier to generate a decrypted message digest;
calculating, at the second element, a calculated message digest from the received data set; and
comparing the decrypted message digest and the calculated message digest.

2. The method of claim 1 wherein verifying the message in real time further comprises, before applying the public key to the received message digest, retrieving the public key corresponding to the identifier from a key store accessible by the second element.

3. The method of claim 1 or claim 2 wherein a plurality of elements are connected to the network and generating at least one key pair comprises generating a key pair for each of the plurality of elements and distributing the public key of each key pair to each of the plurality of elements.

4. The method of any of claims 1 to 3 wherein, in response to determining that the calculated message digest and the decrypted message digest are equal, the method further comprises the step of using the data set.

5. The method of any of claims 1 to 3 wherein, in response to determining that the calculated message digest and the decrypted message digest are not equal, the method further comprises the step of rejecting the data set.

6. The method of any preceding claim wherein the message digest is calculated using a checksum or a cyclic redundancy check.

7. The method of any preceding claim wherein the shared network is a closed network.

8. The method of any preceding claim wherein the elements are power-constrained computing devices.

9. A system for sending and verifying a message comprising;
a plurality of elements;
a network connected to the plurality of elements;
a plurality of key pairs, each pair corresponding to one of the plurality of elements and comprising a private key and a public key which each have a key length of 128 bits or less;
wherein a first element is arranged to:
generate a message digest for a data set;
encrypt the message digest using the private key corresponding to the first element to generate an encrypted message digest
transmit a transmitted message comprising the data set, the encrypted message digest and an identifier generated by the first element;
wherein a second element is arranged to:
receive a received message comprising the encrypted message digest, the identifier and a received data set; and
verify the message in real time by:
applying a public key corresponding to the identifier to the encrypted message digest to generate a decrypted message digest;
calculating a calculated message digest from the received data set and
comparing the decrypted message digest and the calculated message digest.

10. The system of claim 9 wherein each element comprises a key store for storing the private key corresponding to the element and public keys corresponding to other elements connected to the network.

11. The system of claim 9 or claim 10 wherein in response to the comparison identifying that the message digest and the decrypted message digest are equal the second element is arranged to use the data set.

12. The system of claim 9 or claim 10 wherein in response to the comparison identifying that the message digest and the decrypted message digest are not equal the second element is arranged to reject the data set.

13. The system of any of claims 9 to 12 wherein the message digest is calculated by a cyclic redundancy check.

14. The system of any of claims 9 to 13 wherein the network is a closed network.

15. The system of any of claims 9 to 14 wherein the elements are power-constrained computing devices.
